**Europäisches Patentamt**

**European Patent Office**

**Office européen des brevets**

(19)

(11) **EP 1 163 381 B1**

(12) **EUROPÄISCHE PATENTSCHRIFT**

(45) Veröffentlichungstag und Bekanntmachung des Hinweises auf die Patenterteilung:
**28.04.2004 Patentblatt 2004/18**

(51) Int Cl.⁷: **D01F 6/70**, D01F 13/04, C08J 11/08

(21) Anmeldenummer: **00909168.7**

(22) Anmeldetag: **14.02.2000**

(86) Internationale Anmeldenummer:
**PCT/EP2000/001206**

(87) Internationale Veröffentlichungsnummer:
**WO 2000/050673 (31.08.2000 Gazette 2000/35)**

(54) **VERFAHREN UND VORRICHTUNG ZUR HERSTELLUNG VON ELASTANFÄDEN AUS RECYCLING-MATERIAL**

METHOD AND DEVICE FOR PRODUCING ELASTANE THREADS FROM RECYCLING MATERIAL

PROCEDE ET DISPOSITIF DE PRODUCTION DE FILS SPANDEX A PARTIR D'UN MATERIAU RECYCLE

(84) Benannte Vertragsstaaten:
**DE GB IT NL**

(30) Priorität: **24.02.1999 DE 19907830**

(43) Veröffentlichungstag der Anmeldung:
**19.12.2001 Patentblatt 2001/51**

(73) Patentinhaber:
• **Bayer Faser GmbH**
**41538 Dormagen (DE)**
• **Bayer Aktiengesellschaft**
**51368 Leverkusen (DE)**

(72) Erfinder:
• **REINEHR, Ulrich**
**D-41539 Dormagen (DE)**
• **SEHM, Tilo**
**D-40591 Düsseldorf (DE)**
• **ANDERHEGGEN, Wolfgang**
**D-41539 Dormagen (DE)**
• **HERBERTZ, Toni**
**D-41540 Dormagen (DE)**
• **JUDAT, Helmut**
**D-40764 Langenfeld (DE)**

(74) Vertreter: **Bramer-Weger, Elmar et al**
**Bayer AG**
**Konzernbereich RP,**
**Patente und Lizenzen**
**51368 Leverkusen (DE)**

(56) Entgegenhaltungen:
**EP-A- 0 317 273          CA-A- 771 086**
**DE-C- 4 446 339**

• **DATABASE WPI Section Ch, Week 198010 Derwent Publications Ltd., London, GB; Class A25, AN 1980-17495C XP002139266 & JP 55 012128 A (TOYO PRODUCTS KK), 28. Januar 1980 (1980-01-28)**

**Beschreibung**

Die Erfindung betrifft ein Verfahren und eine Vorrichtung zur Herstellung von Elastanfäden aus Spinnlösungen nach einem Trocken- oder Nassspinnprozess unter Verwendung von Elastan-Recyclingmaterial, welches gegebenenfalls durch Beimischung von Frischlösungen von Elastanmaterial in beliebigen Verhältnissen, ergänzt werden kann.

Elastanfäden werden derzeit hauptsächlich nach zwei grundsätzlich verschiedenen Verfahren produziert, dem Trockenspinnverfahren und dem Nassspinnverfahren. Beim Trockenspinnverfahren wird das Spinnlösungsmittel einer Polyurethanlösung, typischerweise in Dimethylacetamid, durch heißes Gas im Spinnschacht und Heizung des Spinnschachtes aus den in den Spinnschacht gesponnenen Fäden entfernt. Beim Nassspinnprozess zur Herstellung von Elastanfäden wird die zu verspinnende Elastanlösung in der Regel nach einer Entgasung vorfiltriert und in einem Spinnkessel überführt. Anschließend erfolgt eine Filtration der Polymerlösung und nach evtl. weiterer Zugabe von Additiven wird die Spinnlösung mittels Dosierpumpen den Spinndüsen zugeführt. Dieser Verfahrensablauf wird beispielsweise von F. Fourné in Chemiefasern/Textilindustrie 44/96. Jahrgang, Juni 1994, Seite 365, oder in US-A-3 526 689 beschrieben.

Unter Elastanlösungen versteht man Lösungen von Polyurethanen oder Polyurethanharnstoffen, die üblicherweise segmentiert aus Hart- und Weichsegmenten aufgebaut sind, in geeigneten Lösungsmitteln wie Dimethylacetamid oder Dimethylformamid. Als Weichsegmente werden gewöhnlich Polyester- oder Polyetherdiolen je nach Verwendungszweck in die Polyurethan(harnstoff)e eingebaut.

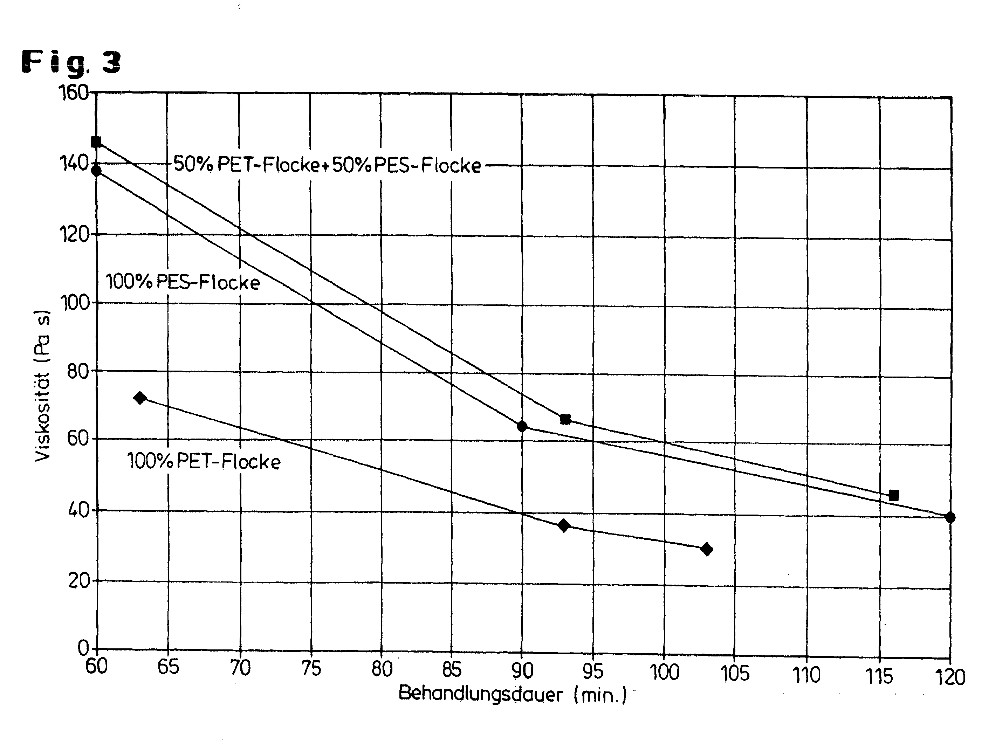

Im allgemeinen werden zur Herstellung von Elastanfäden frische Spinnlösungen verwendet, die nach verschiedenen Löseverfahren hergestellt werden. Ein gängiges Löseverfahren wird z.B. in der Schrift US-A-3 428 711 beschrieben. Demgegenüber verbesserte Löseverfahren sind mit den Offenlegungsschriften DE 43 27 805 und DE 42 22 772 A1 bekannt geworden. Während man im Falle der DE 43 27 805 von einem Strom flüssiger Reaktionsstoffe ausgeht, die in einem Resonanz-Mikrowellenhohlraum zur Erzeugung einer Elastanlösung erwärmt werden, wird in der DE 42 22 772 ein Verfahren zur Herstellung viskositätsstabiler, gelarmer Elastan-Spinnlösungen unter Verwendung eines speziellen mehrstufigen Düsenreaktors beschrieben. Eine schematische Darstellung der komplexen Herstellverfahren wird in Chemiefasern/Textilindustrie 44/96, Jahrgang Juni 1994 auf Seite 393 in Abbildung 3, wiedergegeben.

Löseverfahren für Elastanmaterial, die den Einsatz von reinem recyclierten Material, d.h. z.B. von bereits versponnenem Elastanfadenmaterial, beschreiben, sind bisher nur für eine ganz spezielle Polymerzusammensetzung bekannt.

Nach der kanadischen Patentschrift CA-771086 lassen sich Spandexgarne, die aus Metaxylylendiamin, einem Polyglykol und einem Diisocyanat hergestellt sind, mit einem Lösungsmittel auflösen, filtrieren und wiederum zu Elastanfäden durch das Trockenspinnen aus Düsen verarbeiten. Die Garne müssen eine lineare Polymerstruktur aufweisen, damit man sie auflösen kann. Im allgemeinen weisen herkömmliche Elastangarne jedoch vernetzte Strukturen mit einem Netzwerk in Form von Biuret- und Allophanat-Verknüpfungen auf und lassen sich somit nicht ohne weiteres in Lösung bringen.

In einem weiteren bekannt gewordenen Verfahren werden nach der japanischen Offenlegungsschrift JP 56122836 Elastanfeststoffe mit Chloracetaldehyd und einer starken Säure wie z.B. Schwefelsäure in Isopropylalkohol gelöst und die entstandenen Lösungen zur Herstellung von Syntheseleder weiterverwendet. Eine Verwendung für Elastanfäden ist nicht beschrieben. Die Schrift DD-143916 beschreibt die Herstellung von Polyurethan-/Polyharnstofflösungen durch Zugabe von recyclierter Polyurethanlösung während der Kettenverlängerungsreaktion. Derartige Lösungen sind jedoch nicht zur Herstellung von Elastanfasern, sondern auch nur für die Syntheselederproduktion geeignet. Neben diesen Methoden der werkstofflichen Verwertung, das sogenannte Material-Recycling, sind auch Methoden zur rohstofflichen Wiederverwertung, das sogenannte Chemische-Recycling, bekannt geworden (vergl. E. Weigand: Plastverarbeiter 1995 46 (2) Seite 88-92). Beim Chemischen Recycling wird das Polyurethan-Material beispielsweise durch Hydrolyse mit Heißdampf unter Druck in Diamin und Polyetherpolyol zurückverwandelt. Weitere Umwandlungsmöglichkeiten von Polyurethanen ergeben sich durch Hydrierung, Pyrolyse oder Hochtemperatur-Vergasung.

Der Grund, weshalb bisher kein Recyclingverfahren für normale Elastanabfälle, z.B. aus der Garnproduktion, gefunden wurde, liegt in der Tatsache begründet, dass bei allen Löseverfahren hohe Lösetemperaturen in der Regel über 100°C, angewendet werden müssen, um die Elastanabfälle in Lösung zu bringen. Bei derartigen Temperaturen steigt die Viskosität der Lösung jedoch so stark an, dass keine Weiterverarbeitung erfolgen kann.

Da bei jeder Elastanproduktion Abfälle in Form von Restfasern, z.B. bei Störungen im Produktionsablauf, beim Umspinnen auf andere Typen und Titer oder durch Fehlchargen entstehen und das Polymermaterial einen hohen Rohstoffpreis hat, der in der Regel über 5,00 DM/kg Polymer liegt, ist es aus ökonomischer Sicht sehr interessant, die Elastanabfälle wiederzuverwenden. Die Beseitigung der Faserabfälle (sei es durch Deponie-Einlagerung oder Verbrennung) ist ebenfalls sehr kostenintensiv, so dass auch aus ökologischen Gesichtspunkten die Bereitstellung eines Verfahrens, welches die Weiterverarbeitung der Elastanabfälle ermöglicht, sehr aktuell ist.

Die Aufgabe wird durch ein Verfahren und eine Vorrichtung zur Herstellung von Elastanfäden aus Spinnlösungen nach einem Trocken- oder Nassspinnprozess unter Verwendung von Elastanrecyclingmaterial gelöst, welches gegebenenfalls durch Zumischung von frischen Elastanspinnlösungen in beliebigem Gewichtsverhältnis erfolgen kann, indem man den Lösungen sekundäres aliphatisches Amin, vorzugsweise Diethylamin zugibt.

Gegenstand der Erfindung ist ein Verfahren zur Herstellung von Elastanfäden nach dem Trockenspinnverfahren oder Nassspinnverfahren unter Verwendung von Spinnlösungen aus Elastan-Recyclingmaterial, gegebenenfalls unter Zusatz von Elastan-Frischlösung, dadurch gekennzeichnet, dass man

a) die Abfälle von Elastanmaterial, insbesondere von Elastanfäden zerkleinert, insbesondere auf eine Schnittlänge von mindestens 0,1 mm, bevorzugt auf eine Schnittlänge von mindestens 1 mm, besonders bevorzugt auf eine Schnittlänge von 2 bis 10 mm, ganz besonders bevorzugt auf eine Schnittlänge von 3 bis 5 mm,

b) das zerkleinerte Elastanmaterial in das Spinnlösungsmittel und 0, 1 - 2 % Gewichtsprozent, bezogen auf den Gehalt an Elastanfeststoff eines sekundären, aliphatischen Amins einträgt,

c) das Gemisch aus zerkleinertem Elastanmaterial, Spinnlösungsmittel und sekundären, aliphatischen Amin bei einer Temperatur von 60 - 150°C unter Homogenisieren erhitzt,

d) die entstandene homogene Elastanspinnlösung vorfiltriert

e) gegebenenfalls bei Zusatz von Elastan-Frischlösung die Elastanspinnlösung mit einer Elastan-Frischlösung vorzugsweise gleicher Feststoffkonzentration in beliebigem Mischungsverhältnis bei 70 - 140°C vermischt und nacherhitzt,

f) die entstandene Spinnlösung auf eine Temperatur von höchstens 70°C, vorzugsweise von 50 bis 70°C abkühlt und nochmals filtriert,

g) die fertige Spinnlösung gegebenenfalls nachvermischt, z.B. durch Verrühren, entgast und anschließend nach dem Trockenspinnverfahren oder dem Nassspinnverfahren zu Elastanfäden verspinnt.

Vorzugsweise bestehen die Elastanabfälle sowohl aus Elastanen auf Polyether- als auch auf Polyesterbasis oder Abfällen von gemischt polyether- und polyesterhaltigen Elastanen in beliebigem Mischungsverhältnis.

Als sekundäres aliphatisches Amin wird insbesondere Diethylamin (DEA) in einer Menge von vorzugsweise 0,3 bis 1 Gew-%, insbesondere bevorzugt von 0,5 bis 0,8 Gew-%, bezogen auf Elastanfeststoff, verwendet.

Die Konzentration der fertigen Spinnlösung beträgt im Schritt g) von 22 bis 45 Gew.-%, vorzugsweise von 30 bis 40 Gew.-%.

Bevorzugt wird als Spinnlösungsmittel Dimethylacetamid verwendet.

Im Falle einer gemischten Spinnlösung wird die Elastanspinnlösung mit einer Elastan-Frischlösung im Schritt e) über einen Zeitraum von 5 bis 60 Minuten vermischt.

Die gesamte Mischzeit in den Stufen b) und c) beträgt vorteilhafterweise zusammen mindestens 10 Minuten, vorzugsweise von 60 bis 150 Minuten, besonders bevorzugt von 90 - 120 Minuten.

Die Lösetemperatur in der Stufe c) beträgt günstigerweise von 80 bis 120°C.

Im Falle eines Einsatzes einer Mischung von Elastanabfalllösung und Elastanfrischlösung wird besonders vorteilhaft das sekundäre Amin, insbesondere Diethylamin, zur Elastan-Frischlösung, anstelle im Schritt b) im Schritt e) in Form eines Stammansatzes aus sekundärem Amin und Elastanfrischlösung zugegeben.

Die Recycling-Spinnlösung und die Frischlösung werden bevorzugt über einen statischen Mischer, vorzugsweise bei 70 - 140°C, insbesondere bei 100 - 120°C, innerhalb 5 bis 30 Minuten vermischt und die Spinnlösung anschließend auf 50-70°C abgekühlt.

Der Feststoffgehalt der Recycling-Spinnlösung im Verhältnis zum Feststoffgehalt der Gesamtspinnlösung aus Recycling-Spinnlösung und Elastanfrischlösung beträgt bevorzugt mindestens 10 Gew.-%, bevorzugt mindestens 20 Gew.-%.

Die Verspinnung der Spinnlösungen nach dem Nassspinnverfahren erfolgt effektiver insbesondere aus Spinndüsen mit einem Düsenlochdurchmesser von 0,10 - 0,3 mm, vorzugsweise von 0,1 - 0,2 mm.

Das Elastanmaterial im Schritt a) wird bevorzugt portionsweise, insbesondere über eine Dosierwägeeinrichtung, bevorzugt in einem Rhythmus von 1 - 10 kg/Minute besonders vorzugsweise von 3 - 5 kg/Minute, in die durch einen Rührdispergierer verursachte Rührtrombe in dem vorgelegten Spinnlösungsmittel zugegeben.

Gegenstand der Erfindung sind auch Elastanfäden, erhalten aus dem erfindungsgemäßen Verfahren, insbesondere mit einem Titer bis 10 000 dtex, wobei ihre Fadenfestigkeit 0,5 - 0,95 cN/dtex, vorzugsweise 0,7 - 0,9 cN/dtex und ihre Reißdehnung von 500 bis 750 %, vorzugsweise 550 bis 700 % beträgt.

Gegenstand der Erfindung ist ferner eine Vorrichtung zur Durchführung des erfindungsgemäßen Verfahrens bestehend wenigstens aus einem beheizbaren Mischbehälter mit Feststoffeinlass, einem Rührer und einem Dispergieraggregat, aus einer dem Mischbehälter nachgeschalteten Mischzone mit statischen Mischelementen, aus einer Abkühlzone mit Mischelementen und aus einer Filtereinheit zum Nachfiltern der fertigen Elastanspinnlösung.

Das Dispergieraggregat besteht insbesondere aus wenigstens einem, insbesondere zwei Rührdispergierern.

Die Rührdispergierer sind bevorzugt mit Schneckensegment-Werkzeugen ausgestattet.

Die Schneckensegment-Werkzeuge sind insbesondere ausgewählt aus der Reihe Sogmesser, Stegringe, Knetwendel und Mehrstromwerkzeuge.

Der Rührer des Mischbehälters ist vorzugsweise ein Ankerrührer und der Mischbehälter ist mit einer zusätzlichen Abstreifvorrichtung für die Einbauten des Rührers versehen.

Es wurde überraschenderweise gefunden, dass die Zerkleinerung von Elastan-Spulenmaterial und Gewölle aus den Spinnschächten zu kurzschnittigen Fasern von insbesondere ca. 3 - 5 mm Schnittlänge in einer Schneidemühle mit geeigneten Werkzeugbesatz, keinerlei Schwierigkeiten bereitet. Diese kurzschnittigen Fasern, die eine Dichte von ca. 0,2 g/cm$^3$ aufweisen, lassen sich über Wendeln und Schnecken einwandfrei ohne Anbackungen und Verklumpungen, z.B. aus einem Silo in den Mischbehälter, der zur Herstellung der Spinnlösung dient, fördern.

Zur Herstellung von geeigneten Spinnlösungen aus Faserabfallmaterial sind spezielle Mischaggregate besonders hilfreich. Wie Versuche in einem Einwellenrührkessel mit verschiedenen Rührerbesätzen zeigten, konnte infolge sehr langer Löse- und Mischzeiten und sehr hoher spezifischer Antriebsleistungen aufgrund hoher Viskosität des Mischgutes, keine zufriedenstellende Ergebnisse erzielt werden. Wie sich ferner zeigte, lässt sich im Rührkessel mit vorgelegtem Spinnlösungsmittel (DMAC) mit steigender Zugabe von kurzschnittigen Elastanfascrabfällen die Viskosität nur dann beherrschen und abbauen, wenn man sekundäre, aliphatische Amine, wie beispielsweise Diethylamin (DEA) in den oben beschriebenen Mengen von 0,5 Gew.-% DEA bezogen auf Elastanfeststoff, der Spinnlösung zusetzt. Ohne den Zusatz von sekundären, aliphatischen Aminen erhält man beim Lösen, Rühren und Erwärmen Spinnlösungen, deren Viskosität schnell ansteigt. Derartige Spinnlösungen lassen sich technisch nicht mehr beherrschen. Diese Spinnlösungen sind so hochviskos, dass sie zur Gelierung neigen und aufgrund der hohen notwendigen Drücke auch nicht mehr förderbar sind. Durch Erwärmung der z.B. Diethylamin-haltigen Spinnlösungen auf eine Temperatur bis zu 150°C lassen sich dann in Abhängigkeit von der Kontaktzeit die für den Spinnprozess erforderliche Viskosität einstellen. Die Einstellung der Viskosität von hochkonzentrierten Elastanlösungen durch Reaktion der Lösung mit sekundären aliphatischen Aminen zur Erzeugung von Spinnlösungen für das Trocken- oder Nassspinnen von Elastanfasem war bereits in der DE 44 46 339 beschrieben worden. Überraschenderweise können sekundäre Amine nunmehr auch zur direkten Aufarbeitung von Elastanaltmaterial benutzt werden.

Wie bereits vorher erwähnt, sind Einwellenrührkessel mit verschiedenen Rührerbesätzen auch unter Verwendung von sekundären aliphatischen Aminen zum Spinnlösungsmittel alleine nicht ausreichend, um aus Elastanfaserabfällen geeignete Spinnlösungen herzustellen. Es kommt darin immer wieder zu Anbackungen am Rührerkesselrand, zu Verklumpungen innerhalb des Rührkessels. Mit anderen Worten gesagt, man erhält trotz des Aminzusatzes inhomogene Spinnlösungen, die sich nicht einwandfrei zu Fäden verspinnen lassen.

Es wurde unerwarteterweise gefunden, dass man diese Probleme lösen kann, wenn man von Mischbehältern bestimmter Eigenschaften zur Herstellung der Spinnlösungen ausgeht.

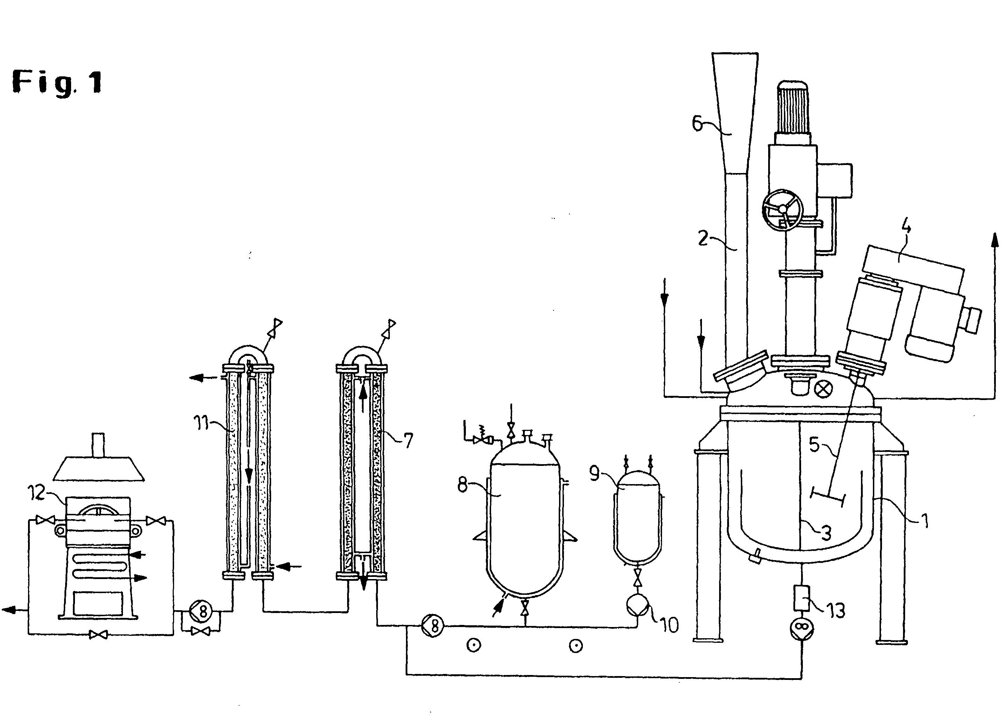

Als ganz besonders geeignete Misch- und Dispergiermaschine hat sich ein Aggregat erwiesen, welches mit Doppelmantel zur Heizung und Kühlung mit mindestens einer, vorzugsweise zwei Mischwellen mit Dissolvern sowie einer Mischwelle mit Ankerrührer (vergl. Fig. 1) ausgerüstet ist. Die Mischwellen sind vorteilhafterweise mit Schneckensegment-Werkzeugen, wie beispielsweise Sogmesser, Stegringen, Knetwendeln oder Mehrstromwerkzeugen besetzt. Um Polymer-Anbackungen an die produktberührte Kesselinnenwand zu vermeiden, wird der Ankerrührer bevorzugt mit federnd gelagerten Abstreifsegmenten bestückt.

Mit einer derartigen Misch- und Dispergiermaschine gelingt es durch Vorlage von Spinnlösungsmittel (insbesondere Dimethylacetamid) und sekundärem aliphatischen Amin durch Zugabe von kurzschnittigen Faserabfällen Elastanspinnlösungen mit Feststoffgehalten bis zu 40 Gew.-% herzustellen, die sich anschließend einwandfrei zu Elastanfasern mit guten Fadeneigenschaften verspinnen lassen.

Es hat sich als vorteilhaft erwiesen, die Zugabe der Faserabfälle im zeitlich gleichen Rhythmus über eine Dosierwägeeinrichtung zuzugeben, um einen homogenen Löseprozess zu erreichen.

Ferner hat sich herausgestellt, dass es besonders günstig ist, die kurzschnittigen Faserabfälle möglichst in Nähe der durch die Mischwellen entstehenden Flüssigkeitstromben einzutragen, um eine gute Benetzung und Auflösung der Fasern zu erzielen.

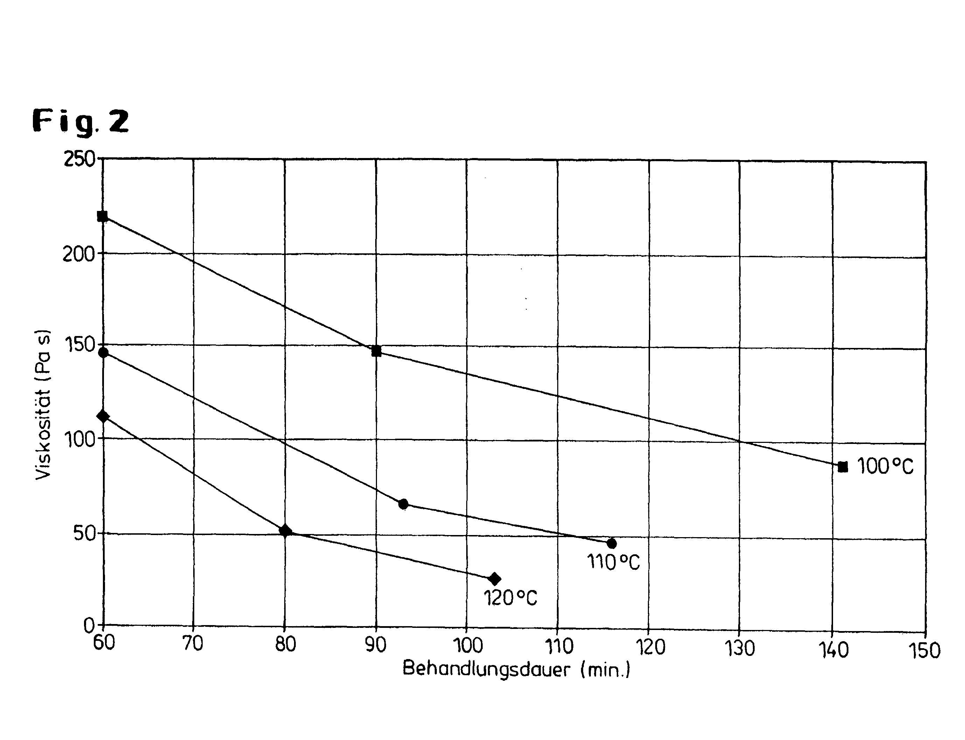

Der beschriebene Löseprozess ist zur Herstellung von Spinnlösungen, die sich sowohl nach dem Trocken- als auch dem Nassspinnverfahren zu Elastanfäden verspinnen lassen, geeignet. Die gewünschte Spinnviskosität, die beim Trockenspinnverfahren deutlich höher liegt als bei einem Nassspinnprozess, lässt sich über den Amingehalt, die Temperatur der Lösung und die Verweilzeit im Erhitzer beliebig einstellen (vergl. Figuren 2 und 3).

Neben Spinnlösungen aus reinem Recyclingmaterial lassen sich auch wie oben beschrieben Mischungen mit frisch hergestellten Elastanspinnlösungen in beliebigem Mischungsverhältnis herstellen.

Auch die Art der Spinnlösung, ob es sich beispielsweise um Spinnlösungen die durch Auflösung von polyester- oder polyetherhaltigem Fasermaterial, oder auch um deren Mischungen in beliebigen Zusammensetzungen handelt, spielt dabei keine Rolle (vergl. Tabelle I). In allen Fällen lassen sich aus derartigen Spinnlösungen Elastanfäden mit guten Fadenqualitäten erzeugen.

Das Elastanaltmaterial (z.B. Fasern oder Gewölle) kann bis zu 15 Gew.-% üblicher Faserpräparationsmittel enthalten, insbesondere mineralische Öle oder Öle auf Polyalkylsiloxanbasis, z.B. Polydimethylsiloxan PDMS und/ oder ethoxyliertes PDMS oder Metallsalze von Fettsäuren (z.B. Mg-Stearat) oder Hydrotalcite allein oder in beliebiger Mischung.

Für einen kontinuierlichen Betrieb ist besonders das Verfahren, welches Mischungen aus Frischlösungen und Recyclingmaterial verwendet, geeignet. Der Einsatz von reinen Recyclinglösungen bietet sich besonders für einen Chargenbetrieb an.

Mit den beschriebenen Vorrichtungen und Löseverfahren lassen sich Elastanspinnlösungen mit einem Feststoffgehalt bis zu 40 Gew.-% bequem herstellen (vergl. Beispiel 11, Tabelle I).

Beim erfindungsgemäßen Recyclingverfahren spielt neben der Herstellung der Spinnlösung auch die Spinnlösungsqualität eine entscheidende Rolle. Gute Spinnlösungsqualitäten führen zu gut filtrierbaren Spinnlösungen ohne raschen Druckaufbau in den. Filteraggregaten und zu langen Düsenstandzeiten und somit zu hohen Produktausbeuten.

Es wurde gefunden, dass man das vorgeschlagene Löseverfahren besonders vorteilhaft mit einem Nassspinnprozess unter Verwendung von Spinndüsen mit Düsenlochdurchmessern von 0,10 - 0,3 mm, insbesondere mit 0,1 - 0,2 mm kombinieren kann, um lange Düsenlaufzeiten zu realisieren. Bei feineren Düsenlochdurchmessern, beispielsweise kleiner als 0,10 mm findet gegebenenfalls ein erheblich höherer Druckaufbau der Spinnlösungen vor der Düse statt, was zu deutlich kürzeren Düsenstandzeiten führt. Düsenlochdurchmesser größer 0,3 mm haben extrem niedrige Spritzgeschwindigkeiten (kleiner 5) und führen unter Umständen zu sehr hohen Spinnverzügen (größer 50), was zu instabilen Spinnprozessen und Fadenabrissen beim Fixieren führt.

Die Auspritzgeschwindigkeit (S) ergibt sich dabei zu:

$$S = \frac{4 \cdot F(m/min)}{Z \cdot d^2 \cdot \pi \cdot 100}$$

F = fördermenge (ccm/min)
Z = Anzahl der Düsenlöcher
d = Düsenlochdurchmesser (cm)

Die folgenden Beispiele in Verbindung mit den Figuren 1-3 dienen der näheren Erläuterung der Erfindung. Alle Prozentangaben beziehen sich, wenn nicht anders vermerkt, auf das Gewicht.

Fig. 1    zeigt den Aufbau einer Vorrichtung zur Herstellung der Elastanlösung aus Fasernabfall.

Fig. 2    zeigt die zeitliche Abnahme der Viskosität einer Spinnlösung nach Beispiel 1 bei verschiedenen Behandlungstemperaturen.

Fig. 3    zeigt die zeitliche Abnahme der Viskosität verschiedener Spinnlösungen aus Recyclingmaterial.

## Beispiele

### Beispiel 1:

a) Herstellung einer Spinnlösung aus Recyclingmaterial

In einem 600 Liter Mischbehälter 1 (vergl. Figur I) wurden 280 kg Dimethylacetamid (DMAC) und 600 g Diethylamin (DEA) über eine Zuführöffnung 2 eingefüllt. Beide Flüssigkeiten wurden bei Raumtemperatur mittels eines Ankerrührers 3 gerührt und vermischt. Anschließend wurde der Dissolver 4 (Dispergieraggregat), der mit Schneckensegmentwerkzeugen 5, bestehend aus Sogmesser, Dissolverscheiben und Knetwendel, bestückt ist, in Gang gesetzt. Die Mantelbeheizung des Mischbehälters 1 war auf 80°C eingestellt. Dann wurde wechselweise in Portionen zu 4 kg/ Minute auf 3 - 5 mm Schnittlänge zerkleinertes Elastanfasermaterial, von Restspulen stammend, über eine Waage (nicht gezeichnet) mit Wendelförderung durch den Befüllstutzen 6 in den Mischbehälter 1 eingefüllt. Das Elastanfasermaterial bestand aus 60 kg Elastanfasermaterial mit Polyether (PET) als Weichsegmentkomponente und aus 60 kg Elastanfasermaterial mit Polyester (PES) als Weichsegmentkomponente, welches wie oben erwähnt, wechselweise über eine Waage eingetragen wurde. Die Feststoffkonzentration betrug 30 Gewichtsprozent und der Anteil an Diethylamin (DEA) lag bei 0,5 Gew.-%, bezogen auf Elastanfeststoff.

Die portionsweise Zugabe des zerkleinerten Elastanfasermaterials wurde so vorgenommen, dass das Material in die durch den Dissolver 4, 5 entstehende Rührtrombe eingebracht wurde. Der Dissolver 4, 5 wurde mit 700 Umdrehungen pro Minute gestartet und nach Beendigung der Fasereintragung nach ca. 30 Minuten, noch ca. 85 Minuten lang, mit 1500 Umdrehungen pro Minute weiterbetrieben. Die gesamte Rührzeit betrug somit ca. 115 Minuten.

Die Temperatur der Mischung stieg dabei durch die eingebrachte Rührenergie auf ca. 110°C an. Die Viskosität der entstandenen Spinnlösung, gemessen bei 50°C, betrug nach 60 Minuten Rührzeit 146 Pa.s und nach Abschluss der Behandlungszeit 48 Pa.s. Die Spinnlösung wurde anschließend über einen Knotenfänger 13 geleitet und mit der Spinnlösung b) zusammen einem beheizten, statischen Mischer 7 (vergl. Figur 1) zugeführt.

b) Herstellung der Spinnlösung aus Frischlösung mit geeigneter Nassspinnviskosität und Vermischung mit Spinnlösung a)

Eine 30 gew.-%ige Elastanspinnlösung, die entsprechend Beispiel 2 aus der Schrift DE-A-42 22 772 hergestellt wurde und eine Spinnviskosität von 138 Pa.s, gemessen bei 50°C aufwies, wurde im Rührkessel 8 (vergl. Abb. I) eingefüllt. (Der Inhalt der DE-A-42 22 772 wird als Offenbarung mit in diese Anmeldung aufgenommen). Die Spinnlösung wurde im Seitenstrom mit einem diethylaminhaltigen Stammansatz aus einem zweiten Rührkessel 9 über eine Zahnradpumpe 10 versetzt und anschließend mit der Spinnlösung a) über eine weitere Zahnradpumpe im Verhältnis 1:1 über einen beheizten, statischen Mischer 7 gefördert und vermischt. Der statische Mischer 7, der mit Mischelementen ausgelegt ist, wurde auf 120°C erhitzt. Die Verweilzeit im Mischer betrug ca. 15 Minuten. Im Seitenstrom wurde soviel DEA-haltiger Stammansatz zudosiert, dass die Spinnlösung b) vor dem Mischer und vor Vereinigung mit der Spinnlösung a) einen DEA-Gehalt von 0,5 Gew.-%, bezogen auf den Elastanfeststoff, hatte. Der Stammansatz in Rührkessel 9 wurde aus 20 kg 30 gew.-%iger Elastanspinnlösung, wie oben beschrieben, durch Zugabe von 4.800 g Diethylamin (DEA) unter 30 Minuten Rühren bei 40°C hergestellt. Die vereinigten Spinnlösungen aus a) und b) wurden nach Durchgang und Behandlung im Mischer 7 anschließend im zweiten Mischer 11 auf 70°C abgekühlt über eine Filterpresse 12 filtriert und in einem Spinnkessel mit Rührer (nicht abgebildet) umgepumpt. Die vereinigte Elastanspinnlösung, welche aus 50 % Frischlösung (Spinnlösung b) bestand, war optisch homogen und enthielt weder größere Gelteilchen noch Reste von unaufgelöstem Fasermaterial. Die Spinnviskosität der Lösung, gemessen bei 50°C, lag bei 18 Pa.s.

c) Herstellung von Elastanfäden

Die Spinnlösung aus dem Spinnkessel wurde direkt vier 172-Lochdüsen mit 0,2 mm Bohrungsdurchmesser, die in ein 22 % DMAC-haltiges Wasserfällbad tauchten, zugeführt. Die dabei gebildeten Filamente wurden mit 80 m/min abgezogen, koalesziert, gewaschen, fixiert, präpariert und auf einem Wickler mit 125 m/min aufgespult. Die erhaltenen Fäden vom Einzeltiter 751 dtex hatten eine Fadenfestigkeit von 0,95 cN/dtex und eine Reißdehnung von 633 %.

In Figur 2 ist die Abnahme der Viskosität für die in Beispiel 1 beschriebene Zusammensetzung der Spinnlösung bei drei verschiedenen Behandlungstemperaturen in Abhängigkeit von der Behandlungsdauer im Mischbehälter 1 (vergl. Fig. 1) wiedergegeben. Wie man den Kurven entnehmen kann, lässt sich die Viskosität in weiten Bereichen einstellen. In Fig. 3 ist die Abnahme der Viskosität für 30 gew.-%ige Spinnlösungen aus Recyclingmaterial verschiedener Zusammensetzungen in Abhängigkeit von der Behandlungsdauer dargestellt. Wie aus den Kurven hervorgeht, erhält man aus Recyclingspinnlösungen mit reinem Elastanfasermaterial auf Polyetherbasis (PET) die Spinnlösung mit der niedrigsten Viskosität und aus Recyclingspinnlösungen aus Elastanfasermaterial mit Polyether (PET) und Polyester (PES) im Mischverhältnis 1: 1, die Spinnlösung mit der höchsten Viskosität bei gleicher Behandlungsdauer im Mischbehälter 1 unter den selben Rührbedingungen des Dissolvers 4, 5 und bei ca. 110°C Mischungstemperatur.

**Beispiel 2:**

a) Herstellung einer Spinnlösung aus reinem Recyclingmaterial

In einem 600 Liter Mischbehälter 1 (vergl. Fig. 1) wurden 280 kg DMAC und 600 g DEA über die Zufuhröffnung 2 eingefüllt. Beide Flüssigkeiten wurden durch Rühren bei Raumtemperatur vermischt. Anschließend wurde der Dissolver 4, der mit Schneckensegmentwerkzeugen 5 bestückt ist, mit 700 Umdrehungen pro Minute gestartet. Die Mantelbeheizung des Mischbehälters 1 wurde auf ca. 80°C eingestellt. Dann wurde in Portionen zu 4 kg/Minute auf 3 - 5 mm Schnittlänge zerkleinertes Elastanfasermaterial, von Restspulen stammend, über eine Waage mit Wendelförderung durch den Befüllstutzen 6 in den Mischbehälter 1 eingefüllt. Das Elastanfasermaterial bestand aus 120 kg Faserschnittverbänden mit Polyether (PET) als Weichsegmentkomponente im Elastan. Die Feststoffkonzentration betrug wiederum 30 Gew.-% und der Anteil an DEA lag bei 0,5 Gew.-%, bezogen auf Feststoff. Die Zugabe der Faserschnittverbände erfolgt wieder in die durch den Dissolver 4 entstehende Rührtrombe. Der Dissolver 4 wurde nach Beendigung der Fasereintragung nach ca. 30 Minuten, noch weitere 70 Minuten bei 1500 Umdrehungen pro Minute weiterbetrieben. Die gesamte Rührzeit lag bei ca. 100 Minuten. Die Produkttemperatur stieg dabei durch die eingebrachte Rührenergie auf ca. 110°C an. Die Viskosität der Spinnlösung, gemessen bei 50°C, betrug nach 63 Minuten Rührzeit 72 Pa.s und nach Abschluss der Behandlungszeit 30 Pa.s (vergl. Fig. 3). Die Spinnlösung wurde anschließend über einen Knotenfänger 13 gefahren und dann direkt einem beheizten Mischer 7 zugeführt. Der statische Mischer 7, der mit Mischelementen ausgelegt ist, wurde auf 80°C erhitzt. Die Verweilzeit im Mischer 7 betrug ca. 10 Minuten. Anschließend wurde die Spinnlösung im Mischer 11 auf 70°C abgekühlt, über eine Filterpresse 12 filtriert und in einen Spinnkessel (nicht gezeichnet) umgepumpt. Die Spinnlösung, die aus 100 % Recyclingmaterial bestand, war optisch wiederum vollkommen homogen und enthielt weder gröbere Gelteilchen noch Reste von unaufgelöstem Fasermaterial. Die Spinnviskosität der Lösung, gemessen bei 50°C, lag bei 20 Pa.s.

b) Herstellung von Elastanfäden

Die Spinnlösung aus dem Spinnkessel wurde anschließend, wie in Beispiel 1 beschrieben, wiederum direkt vier 172 Lochdüsen mit 0,25 mm statt 0,2 mm Bohrungsdurchmesser, die in ein 25 % DMAC-haltiges Wasserfällbad tauchten, zugeführt und wie im Beispiel 1 beschrieben, versponnen und nachbehandelt. Die resultierenden Elastanfäden hatten einen Titer von 822 dtex, eine Fadenfestigkeit von 0,79 cN/dtex und eine Reißdehnung von 626 %.

### Beispiele 3 - 12

In der Tabelle I sind gemäß den Beispielen 3 - 11 weitere Zusammensetzungen von Recyclingmaterialien verschiedener chemischer Provenienz und Frischlösungen verschiedener Provenienz, für unterschiedliche Mischungsverhältnisse aufgeführt. Die verwendete Abkürzung PES bedeutet hierin, dass es sich um Elastanspinnlösungen mit einer Polyesterkomponente als Weichmachersegment handelt, hergestellt entsprechend Beispiel 4 aus DE 42 22 772 A1, und im Falle der Abkürzung PET Elastanspinnlösungen mit Polyethermaterial, entsprechend Beispiel 2 aus DE 42 222 772 A1, vorliegt. Alle Spinnlösungen wurden, wie in Beispiel Nr. 1 aufgeführt, hergestellt und zu Elastanfäden vom Titer 800 dtex versponnen. Im Falle der Beispiele 10 und 11, wo höher konzentrierte Spinnlösungen mit 36 bzw. 40,3 gew.-%iger Spinnlösungskonzentration angesetzt wurden, wurde die Begleitheizung im Mischbehälter 1 mit 110°C statt 80°C gefahren. Die gesamte Rührzeit wurde auf 130 Minuten erhöht und der Dissolver 4 mit 1750 statt 1500 Umdrehungen pro Minute gefahren. Die Produkttemperatur lag bei ca. 133°C und die Viskosität der Spinnlösungen nach Abschluss der Behandlungszeit betrug bei 52 bzw. 46 Pa.s. Beispiel 12 schließlich stellt ein Vergleichsbeispiel dar, wobei von reiner Frischlösung auf Polyetherbasis ausgegangen wird. Wie man der Tabelle 1 entnehmen kann, werden sowohl mit 100 %iger Recyclingspinnlösung (vergl. Beispiel 3), als auch mit allen Mischverhältnissen beim Verspinnen der Lösungen Elastanfäden mit einer Fadenfestigkeit von mindestens 0,72 cN/dtex und einer Fadenreißdehnung von mindestens 590 % erzielt.

Tabelle 1

| Bsp. Nr. | Zusammensetzung der Spinnlösung | | | Fadendaten | | |
|---|---|---|---|---|---|---|
| | Frisch-lösung/ Typ (%) | Recycling-lösung/Typ (%) | Spinnlsg. Konz. (%) | Titer (dtex) | Festigkeit (cN/dtex) | Dehnung (%) |
| 3 | - | 100 / PES | 30 | 802 | 0,75 | 631 |
| 4 | 75 / PES | 25 / PET | 30 | 777 | 0,81 | 617 |
| 5 | 50 / PES | 50 / PET | 30 | 772 | 0,77 | 615 |
| 6 | 50 / PET | 50 / PET | 30 | 753 | 0,79 | 627 |
| 7 | 50 / PET | 50 / PES | 30 | 779 | 0,9 | 612 |
| 8 | 70 / PET | 15/PET; 15/PES | 30 | 817 | 0,76 | 590 |
| 9 | 75 / PET | 25 / PES | 30 | 814 | 0,73 | 649 |
| 10 | 50 / PET | 50 / PET | 36 | 797 | 0,78 | 624 |
| 11 | 50 / PET | 50 / PET | 40,3 | 808 | 0,72 | 663 |

Tabelle 1  (fortgesetzt)

| Bsp. Nr. | Zusammensetzung der Spinnlösung | | | Fadendaten | | |
|---|---|---|---|---|---|---|
| | Frisch-lösung/ Typ (%) | Recycling-lösung/Typ (%) | Spinnlsg. Konz. (%) | Titer (dtex) | Festigkeit (cN/ dtex) | Dehnung (%) |
| 12 | 100 / PET | Vergleich | 30 | 774 | 0,92 | 584 |

**Patentansprüche**

1. Verfahren zur Herstellung von Elastanfäden nach dem Trockenspinnverfahren oder Nassspinnverfahren unter Verwendung von Spinnlösungen aus Elastan-Recyclingmaterial, gegebenenfalls unter Zusatz von Elastan-Frischlösung, **dadurch gekennzeichnet, dass** man

    a) die Abfälle von Elastanmaterial, insbesondere von Elastanfäden zerkleinert, insbesondere auf eine Schnittlänge von mindestens 0,1 mm, bevorzugt auf eine Schnittlänge von mindestens 1 mm, besonders bevorzugt auf eine Schnittlänge von 2 bis 10 mm, ganz besonders bevorzugt auf eine Schnittlänge von 3 bis 5 mm

    b) das zerkleinerte Elastanmaterial in das Spinnlösungsmittel und 0,1 - 2 % Gewichtsprozent, bezogen auf den Gehalt an Elastanfeststoff eines sekundären, aliphatischen Amins einträgt,

    c) das Gemisch aus zerkleinertem Elastanmaterial, Spinnlösungsmittel und sekundären, aliphatischen Amin bei einer Temperatur von 60 - 150°C unter Homogenisieren erhitzt,

    d) die entstandene homogene Elastanspinnlösung vorfiltriert

    e) gegebenenfalls bei Zusatz von Elastan-Frischlösung die Elastanspinnlösung mit einer Elastan-Frischlösung vorzugsweise gleicher Feststoffkonzentration in beliebigem Mischungsverhältnis bei 70 - 140°C vermischt und nacherhitzt.

    f) die entstandene Spinnlösung auf eine Temperatur von höchstens 70°C, vorzugsweise von 50 bis 70°C abkühlt und nochmals filtriert

    g) die fertige Spinnlösung gegebenenfalls nachvermischt, z.B. durch Verrühren, entgast und anschließend nach dem Trockenspinnverfahren oder dem Nassspinnverfahren zu Elastanfäden verspinnt.

2. Verfahren nach Anspruch 1, **dadurch gekennzeichnet, dass** die Elastanabfälle sowohl aus Elastanen auf Polyether- als auch auf Polyesterbasis oder Abfällen von gemischt polyether- und polyesterhaltigen Elastanen in beliebigem Mischungsverhältnis bestehen.

3. Verfahren nach Anspruch 1 oder 2, **dadurch gekennzeichnet, dass** als sekundäres aliphatisches Amin Diethylamin (DEA) in einer Menge von vorzugsweise 0,3 bis 1 Gew-%, insbesondere bevorzugt von 0,5 bis 0,8 Gew-%, bezogen auf Elastanfeststoff, verwendet wird.

4. Verfahren nach den Ansprüchen 1 - 3, **dadurch gekennzeichnet, dass** die Konzentration der fertigen Spinnlösung im Schritt g) von 22 bis 45 Gew.-%, vorzugsweise von 30 bis 40 Gew.-%, beträgt.

5. Verfahren nach den Ansprüchen 1 - 4, **dadurch gekennzeichnet, dass** als Spinnlösungsmittel Dimethylacetamid verwendet wird.

6. Verfahren nach den Ansprüchen 1 - 5, **dadurch gekennzeichnet, dass** die Elastanspinnlösung mit einer Elastan-Frischlösung im Schritt e) über einen Zeitraum von 5 bis 60 Minuten vermischt wird

7. Verfahren nach den Ansprüchen 1 - 6, **dadurch gekennzeichnet, dass** die gesamte Mischzeit in den Stufen b) und c) zusammen mindestens 10 Minuten, vorzugsweise von 60 bis 150 Minuten, besonders bevorzugt von 90 bis 120 Minuten beträgt.

8. Verfahren nach den Ansprüchen 1 - 7, **dadurch gekennzeichnet, dass** die Lösetemperatur in der Stufe c) von 80 bis 120°C beträgt.

9. Verfahren nach den Ansprüchen 1 - 8, **dadurch gekennzeichnet, dass** im Falle eines Einsatzes einer Mischung von Elastanabfalllösung und Elastanfrischlösung, die erforderliche Zugabe von sekundärem Amin, insbesondere von Diethylamin, zur Elastan-Frischlösung, anstelle im Schritt b) im Schritt e) in Form eines Stammansatzes aus sekundärem Amin und Elastanfrischlösung erfolgt.

10. Verfahren nach den Ansprüchen 1 - 9, **dadurch gekennzeichnet, dass** die Vermischung von Recycling-Spinnlösung und Frischlösung über einen statischen Mischer, vorzugsweise bei 70 - 140°C, insbesondere bei 100 bis 120°C, innerhalb 5 - 30 Minuten erfolgt und die Spinnlösung anschließend auf 50 - 70°C abgekühlt wird.

11. Verfahren nach den Ansprüchen 1 - 10, **dadurch gekennzeichnet, dass** der Feststoffgehalt der Recycling-Spinnlösung im Verhältnis zum Feststoffgehalt der Gesamtspinnlösung aus Recycling-Spinnlösung und Elastanfrischlösung mindestens 10 Gew.-%, bevorzugt mindestens 20 Gew.-% beträgt.

12. Verfahren nach den Ansprüchen 1 - 11, **dadurch gekennzeichnet, dass** man die Verspinnung der Spinnlösungen nach dem Nassspinnverfahren aus Spinndüsen mit einem Düsenlochdurchmesser von 0,10 - 0,3 mm, vorzugsweise von 0,1 - 0,2 mm vornimmt.

13. Verfahren nach den Ansprüchen 1 - 12, **dadurch gekennzeichnet, dass** das Elastanmaterial im Schritt a) portionsweise, insbesondere über eine Dosierwägeeinrichtung, bevorzugt in einem Rhythmus von 1 - 10 kg/Minute besonders vorzugsweise von 3 - 5 kg/Minute, in die durch einen Rührdispergierer verursachte Rührtrombe in dem vorgelegten Spinnlösungsmittel zugegeben wird.

14. Elastanfäden, erhalten aus einem Verfahren nach einem der Ansprüche 1 - 13, insbesondere mit einem Titer bis 10 000 dtex, **dadurch gekennzeichnet, dass** ihre Fadenfestigkeit 0,5 - 0,95 cN/dtex, vorzugsweise 0,7 - 0,9 cN/dtex und die Reißdehnung von 500 bis 750 %, vorzugsweise 550 bis 700 % beträgt.

15. Vorrichtung zur Durchführung des Verfahrens nach einem der Ansprüche 1 bis 13, bestehend wenigstens aus einem beheizbaren Mischbehälter 1, mit Feststoffeinlass 2, 6, einem Rührer 3 und einem Dispergieraggregat 4, 5, aus einer dem Mischbehälter 1 nachgeschalteten Mischzone 7 mit statischen Mischelementen, aus einer Abkühlzone 11 mit Mischelementen und aus einer Filtereinheit 12 zum Nachfiltern der fertigen Elastanspinnlösung.

16. Vorrichtung nach Anspruch 15, **dadurch gekennzeichnet, dass** das Dispergieraggregat 4, 5 aus wenigstens einem, insbesondere zwei Rührdispergierem gebildet ist.

17. Vorrichtung nach Anspruch 16, **dadurch gekennzeichnet, dass** der bzw. die Rührdispergierer 4 mit Schneckensegment-Werkzeugen 5 ausgestattet sind.

18. Vorrichtung nach Anspruch 16, **dadurch gekennzeichnet, dass** der bzw. die Rührdispergierer 4 mit Schneckensegment-Werkzeugen 5 ausgewählt aus Sogmessern, Stegringen, Knetwendeln und Mehrstromwerkzeugen ausgestattet sind.

19. Vorrichtung nach einem der Ansprüche 14 bis 17, **dadurch gekennzeichnet, dass** der Rührer 3 ein Ankerrührer ist und der Mischbehälter 1 mit einer zusätzlichen Abstreifvorrichtung für die Einbauten des Rührers 3 versehen ist.

**Claims**

1. Process for producing elastane fibres by the dry spinning process or the wet spinning process using spinning solutions of elastane recycling material, optionally with the addition of fresh elastane solution, **characterised in that**

    a) the waste obtained from elastane material, in particular from elastane fibres, is cut up, in particular to a cut length of at least 0.1 mm, preferably to a cut length of at least 1 mm, particularly preferably to a cut length of 2 to 10 mm, most preferably to a cut length of 3 to 5 mm,

b) the cut elastane material and 0.1 to 2 wt.%, based on the content of solid elastane, of a secondary aliphatic amine are introduced into the spinning solvent,

c) the mixture of cut elastane material, spinning solvent and secondary aliphatic amine is heated at a temperature of 60°C to 150°C, with homogenisation,

d) the resulting homogeneous elastane spinning solution is prefiltered,

e) optionally with the addition of fresh elastane solution, the elastane spinning solution is mixed at 70°C to 140°C with a fresh elastane solution, preferably having the same solids concentration, in any mixing ratio and heating is continued,

f) the resulting spinning solution is cooled to a temperature of not more than 70°C, preferably from 50°C to 70°C, and filtered once more,

g) the finished spinning solution is optionally remixed, for example, by stirring, degassed and subsequently spun into elastane fibres by the dry spinning process or the wet spinning process.

2. Process according to claim 1, **characterised in that** the elastane waste consists of both elastanes based on polyether and elastanes based on polyester, or of wastes of mixed polyether- and polyester-containing elastanes in any mixing ratio.

3. Process according to claim 1 or 2, **characterised in that** the secondary aliphatic amine used is diethylamine (DEA), in a quantity preferably of 0.3 to 1 wt.%, in particular preferably of 0.5 to 0.8 wt.%, based on solid elastane.

4. Process according to claims 1 to 3, **characterised in that** the concentration of the finished spinning solution in step g) is from 22 to 45 wt.%, preferably from 30 to 40 wt.%.

5. Process according to claims 1 to 4, **characterised in that** dimethylacetamide is used as the spinning solvent.

6. Process according to claims 1 to 5, **characterised in that** the elastane spinning solution is mixed with a fresh elastane solution in step e) for a period of 5 to 60 minutes.

7. Process according to claims 1 to 6, **characterised in that** the total mixing time in steps b) and c) together is at least 10 minutes, preferably from 60 to 150 minutes, particularly preferably 90 to 120 minutes.

8. Process according to claims 1 to 7, **characterised in that** the solution temperature in step c) is from 80°C to 120°C.

9. Process according to claims 1 to 8, **characterised in that** in the case where a mixture of waste elastane solution and fresh elastane solution is used, the required addition of secondary amine, in particular of diethylamine, to the fresh elastane solution is carried out not in step b) but in step e) and in the form of a stock batch of secondary amine and fresh elastane solution.

10. Process according to claims 1 to 9, **characterised in that** the recycling spinning solution and the fresh solution are preferably mixed together in a static mixer, preferably at 70°C to 140°C, in particular at 100°C to 120°C, for a period of 5 to 30 minutes and the spinning solution is subsequently cooled to 50°C to 70°C.

11. Process according to claims 1 to 10, **characterised in that** the solids content of the recycling spinning solution in proportion to the solids concentration of the total spinning solution comprising recycling spinning solution and fresh elastane solution is at least 10 wt.%, preferably at least 20 wt.%.

12. Process according to claims 1 to 11, **characterised in that** the spinning of the spinning solutions by the wet spinning process is effected from spinnerets having a nozzle hole diameter of 0.10 to 0.3 mm, preferably of 0.1 to 0.2 mm.

13. Process according to claims 1 to 12, **characterised in that** the elastane material in step a) is introduced in portions, in particular via a metering/weighing device, preferably at a rhythm of 1 to 10 kg/minute, particularly preferably 3 to 5 kg/minute, into the vortex created by an agitated disperser in the previously prepared spinning solvent.

**14.** Elastane fibres obtained from a process according to one of claims 1 to 13, in particular with a titre of up to 10,000 dtex, **characterised in that** their fibre strength is 0.5 to 0.95 cN/dtex, preferably 0.7 to 0.9 cN/dtex, and the elongation at tear is 500 to 750%, preferably 550 to 700%.

**15.** Device for carrying out the process according to one of claims 1 to 13, consisting at least of a heatable mixing tank 1 with an inlet 2, 6 for solid material, a mixer 3 and a dispersing unit 4, 5, of a mixing zone 7 with static mixing elements, connected downstream of the mixing tank 1, of a cooling zone 11 with mixing elements and of a filtering unit 12 for subsequently filtering the prepared elastane spinning solution.

**16.** Device according to claim 15, **characterised in that** the dispersing unit 4, 5, consists of at least one, in particular two, agitated dispersers.

**17.** Device according to claim 16, **characterised in that** the agitated disperser(s) 4 is/are equipped with screw-type segmented appliances 5.

**18.** Device according to claim 16, **characterised in that** the agitated disperser(s) 4 is/are equipped with screw-type segmented appliances 5 selected from suction cutters, webbed rings, kneading spirals and multiple current appliances.

**19.** Device according to one of claims 14 to 17, **characterised in that** the mixer 3 is an anchor mixer and the mixing tank 1 is provided with an additional cleaning device for the internal fittings of the mixer 3.

**Revendications**

**1.** Procédé de préparation de fils élastane selon le procédé de filage à sec ou de filage humide en utilisant des solutions de filage de matière de recyclage d'élastane, éventuellement par addition d'une solution fraîche d'élastane, **caractérisé en ce qu'**on effectue les étapes suivantes :

a) on raccourcit les chutes de la matière élastane, en particulier des fils d'élastane, en particulier selon une longueur de coupe d'au moins 0,1 mm, de préférence selon une longueur de coupe d'au moins 1 mm, en particulier de préférence selon une longueur de coupe de 2 à 10 mm, tout particulièrement de préférence selon une longueur de coupe de 3 à 5 mm
b) on associe la matière élastane raccourcie dans la solution de filage et 0,1 - 2 % en pourcent en poids, rapporté à la quantité de solide d'élastane d'une amine aliphatique secondaire,
c) on chauffe le mélange de matière élastane raccourcie, le solvant de filage et l'amine aliphatique secondaire à une température de 60 - 150°C sous homogénéisation,
d) on filtre la solution d'élastane homogène formée,
e) éventuellement par addition de solution fraîche d'élastane on mélange la solution de filage d'élastane avec une solution fraîche d'élastane de préférence de même concentration en solide dans un rapport préféré à 70 - 140°C et on chauffe postérieurement
f) on refroidit la solution de filage obtenue à une température au maximum de 70°C, de préférence 50 à 70°C et on filtre encore
g) on mélange éventuellement postérieurement la solution de filage fraîche, par exemple par agitation, on la dégaze et ensuite on file pour obtenir des fils d'élastane selon le procédé de filage à sec ou le procédé de filage humide.

**2.** Procédé selon la revendication 1, **caractérisé en ce que** les chutes d'élastane sont constituées aussi bien d'élastane à base de polyéther comme également de polyester ou de chutes d'élastane contenant du polyéther et du polyester mélangés dans un rapport de mélange préféré.

**3.** Procédé selon la revendication 1 ou 2, **caractérisé en ce qu'**on utilise comme amine aliphatique secondaire la diéthylamine (DEA) en une quantité de préférence de 0,3 à 1 % en poids, de préférence en particulier de 0,5 à 0,8 % en poids, rapporté au solide élastane.

**4.** Procédé selon les revendications 1 - 3, **caractérisé en ce que** la concentration de la solution de filage finie dans l'étape g) est de 22 à 45 % en poids, de préférence 30 à 40 % en poids.

**5.** Procédé selon les revendications 1 - 4, **caractérisé en ce qu'**on utilise comme solvant de filage le diméthylacétanmide.

**6.** Procédé selon les revendications 1 - 5, **caractérisé en ce qu'**on mélange la solution de filage d'élastane avec une solution fraîche d'élastane dans l'étape c) pendant une période de temps de 5 à 60 minutes.

**7.** Procédé selon les revendications 1 - 6, **caractérisé en ce que** le temps de mélange total dans les étapes b) et c) ensemble est d'au moins 10 minutes, de préférence de 60 à 150 minutes, en particulier de préférence 90 à 120 minutes.

**8.** Procédé selon les revendications 1 - 7, **caractérisé en ce que** la température de solution dans l'étape c) est de 80 à 120°C.

**9.** Procédé selon les revendications 1 - 8, **caractérisé en ce que** dans le cas d'une addition d'un mélange de solution de chutes d'élastane et d'une solution fraîche d'élastane, l'addition nécessaire de l'amine secondaire, en particulier de la diéthylamine, pour la solution fraîche d'élastane, mise dans l'étape b) à lieu dans l'étape e) sous forme d'une addition d'ensemble de l'amine secondaire et de la solution fraîche d'élastane.

**10.** Procédé selon les revendications 1 - 9, **caractérisé en ce que** le mélange de la solution de filage de recyclage et la solution fraîche a lieu par mélange statique, de préférence à 70° - 140°C, en particulier de 100 à 120°C, en 5 - 30 minutes et la solution de filage est ensuite refroidie à 50 - 70°C.

**11.** Procédé selon les revendications 1 - 10, **caractérisé en ce que** la quantité de solide de la solution de filage de recyclage est dans le rapport de la quantité de solide de la solution de filage totale à partir de la solution de recyclage et de la solution d'élastane d'au moins 10 % en poids, de préférence au moins 20 % en poids.

**12.** Procédé selon les revendications 1 - 11 , **caractérisé en ce qu'**on effectue le filage des solutions de filage selon un procédé de filage humide à partir de buses de filage avec un diamètre de trou de buse de 0,10 - 0,3 mm, de préférence 0,1 - 0,2 mm.

**13.** Procédé selon les revendications 1 - 12, **caractérisé en ce que** la matière élastane dans l'étape a) est amenée par partie en particulier via un dispositif de poidoseur, de préférence selon un rythme de 1 - 10 kg/minute, en particulier de préférence 3 - 5 kg/minute, dans le solvant de filage proposé via un agitateur dispersant provoqaunt une trombe d'agitation.

**14.** Fils d'élastane, obtenus selon un procédé selon une des revendications 1 - 13, en particulier avec un titre jusqu'à 10 000 dtex, **caractérisé en ce que** leurs solidité de fil est de 0,5 - 0,95 cN/dtex, de préférence 0,7 - 0,9 cN/dtex et l'allongement à la rupture est de 500 à 750 %, de préférence 550 à 700 %.

**15.** Dispositif pour réaliser le procédé selon une des revendications 1 à 13, comprenant au moins un réservoir de mélange 1 pouvant être chauffé, avec une amenée de solide 2,6, un agitateur 3 et un dispositif de dispersion 4,5, d'une zone de mélange 7 en aval du réservoir de mélange 1 avec des éléments de mélange statiques, d'une zone de refroidissement 11 avec des éléments de mélange et d'une unité de filtrage 12 pour le filtrage postérieur de la solution de filage finie.

**16.** Dispositif selon la revendication 15, **caractérisé en ce que** le dispositif de dispersion 4,5 est formé d'au moins un, en particulier deux dispositifs de dispersion par agitation.

**17.** Dispositif selon la revendication 16, **caractérisé en ce que** le ou les dispositifs de dispersion 4 sont équipés d'outils de segment à vis 5.

**18.** Dispositif selon la revendication 16, **caractérisé en ce que** le ou les dispositifs de dispersion 4 sont équipés d'outils de segment à vis 5 choisis parmi des couteaux d'aspiration, des anneaux d'écartement, des pales pétrisseuses et des outils multicourants.

**19.** Dispositif selon les revendications 14 à 17, **caractérisé en ce que** l'agitateur 3 est un agitateur à enroulement, et le réservoir de mélange 1 est prévu avec un dispositif de démoulage supplémentaire pour le montage de l'agitateur 3.

Fig. 1

# Fig. 2

Behandlungsdauer (min.)

EP 1 163 381 B1

Fig. 3